# EUROPÄISCHE PATENTANMELDUNG

(11) **EP 2 071 199 A2**
(43) Veröffentlichungstag der Anmeldung: **17.06.2009**
(21) Anmeldenummer: 08075873.3
(22) Anmeldetag: 06.11.2008
(51) Int. Cl.: F16B 21/16

(54) **Bolzensicherung**

(30) Priorität: 12.12.2007 DE 102007060452; 21.12.2007 DE 202007018232 U
(71) Anmelder: Terex Demag GmbH, 66482 Zweibrücken (DE)
(72) Erfinder: Kuhn, Roland, 66386 St. Ingbert (DE)
(74) Vertreter: Meissner, Peter E.

(57) **Zusammenfassung**

2.1. Die Erfindung betrifft eine Bolzensicherung mit einem Bolzen (1), der von der Ausnehmung wenigstens eines Bauteiles aufgenommen wird, und einem Sicherungselement (2), zur Sicherung des Bolzens gegen axiale Verschiebung, wobei der Bolzen in seinem Umfang eine nutartige, quer zur Bolzenachse verlaufende Vertiefung (4) aufweist, die mit dem Sicherungselement (2) in Eingriff bringbar ist.

2.2. Um die Bolzensicherung zu verbessern ist vorgesehen,
dass in dem Bauteil eine mit der Vertiefung (4) im Bolzen (1) ausrichtbare Öffnung (5) vorgesehen ist, in die ein als Stift ausgebildetes Sicherungselement (2) derart einführbar ist, dass die Vertiefung (4) des Bolzens (1) diesen Stift sekantenartig aufnimmt.

## Beschreibung

Die Erfindung betrifft eine Bolzensicherung mit einem Bolzen, der von der Ausnehmung wenigstens eines Bauteiles aufgenommen wird, und einem Sicherungselement, zur Sicherung des Bolzens gegen axiale Verschiebung, wobei der Bolzen in seinem Umfang eine nutartige, quer zur Bolzenachse verlaufende Vertiefung aufweist, die mit dem Sicherungselement in Eingriff bringbar ist.

Eine derartige Bolzensicherung ist im Wesentlichen aus der DE 100 50 143 A1 bekannt. Hierbei besteht das Sicherungselement aus einem länglichen, ebenen Sicherungsblech mit einem Langloch, das zwei Bereiche unterschiedlichen Durchmessers aufweist, wobei der kleinere Durchmesser der nutartigen Vertiefung im Bolzen und der größere Durchmesser seinem normalen Umfang entspricht. Durch Verschiebung des Sicherungsbleches radial zum Bolzen kann somit ein Klemmen und damit eine Sicherung gegen ein axiales Bewegen des Bolzens erreicht werden.

Eine Sicherung gegen ein axiales Verschieben eines Bolzens und gegen Verdrehen ist aus dem DE 91 08 231 U bekannt, wobei hier ein Stift in eine Aufnahmebohrung im Bolzen einsteckbar ist.

Aus der Praxis ist ferner eine Bolzensicherung bekannt, bei der eine Sicherungsfeder an einem Ende des Bolzens befestigt ist, die mit einer entsprechenden Halterung am Bauteil verbindbar ist.

Bei Kranen sind derartige Bolzensicherungen beispielsweise vorgesehen an der Verbindung untere Achse im Rollenkopf/Gabelkopf des HAV-Grundauslegers. Diese kann sich beim Klappen der HAV von Transport- in Arbeitsstellung durch Kontakt zu angrenzenden Bauteilen wie Rippen verbiegen und ist dann nicht mehr ohne Weiteres demontierbar/montierbar. Die Bolzensicherung ist dann defekt und muß ersetzt werden

Der Erfindung liegt die Aufgabe zugrunde eine Bolzensicherung zu schaffen, die die Gerätesicherheit verbessert, so dass niemand verleitet wird, einen durch fehlende oder mangelhafte Bolzensicherung nicht korrekt abgesteckten Bolzen einzubauen.

Gelöst wird diese Aufgabe erfindungsgemäß mit einer Bolzensicherung mit einem Bolzen, der von der Ausnehmung wenigstens eines Bauteiles aufgenommen wird, und einem Sicherungselement, zur Sicherung des Bolzens gegen axiale Verschiebung, wobei der Bolzen in seinem Umfang eine nutartige, quer zur Bolzenachse verlaufende Vertiefung aufweist, die mit dem Sicherungselement in Eingriff bringbar ist, dadurch,
dass in dem Bauteil eine mit der Vertiefung im Bolzen ausrichtbare Öffnung vorgesehen ist, in die ein als Stift ausgebildetes Sicherungselement derart einführbar ist, dass die Vertiefung des Bolzens diesen Stift sekantenartig aufnimmt.

Der Stift ist selbst gegen axiale Verschiebung sicherbar.

Die erfindungsgemäße Bolzensicherung bietet eine Reihe von wesentlichen Vorteilen.

So ist die Bolzensicherung problemlos montierbar und entsprechend auch demontierbar, sie wird durch eine Drehbewegung des Bolzens nicht verspannt. Der zu sichernde Bolzen ist problemlos zu demontieren.

Bei einer Drehbewegung ist es zwar möglich, dass der Bolzen sich mit den Bauteilen mitdreht, allerdings nicht zwingende um den gleichen Winkel. Während es in dieser Situation bei bekannten Ausführungen möglich ist, dass sich die Bolzensicherung unter Umständen aus Platzgründen nicht mehr demontieren lässt, ist bei der erfindungsgemäßen Konstruktion die Demontierbarkeit des Sicherungselements jederzeit gewährleistet.

Bei der vorgeschlagenen Lösung bleibt das Sicherungselement mit einem der beiden zu verbindenden Teile drehfest verbunden. Die Drehbewegung des Bolzens ist in keiner Weise eingeschränkt. So wird aus der Bolzendrehbewegung keine Kraft auf das Sicherungselement übertragen, die dieses beschädigen/zerstören könnte. Gleichzeitig bewirkt die Ringnut, dass der zu sichernde Bolzen in axialer Richtung gehalten wird.

Durch die erfindungsgemäße Ausführung ist Das Sicherungselement des zu sichernden Bolzens einfacher und schneller zu demontieren als bei den bisher eingesetzten Lösungen, dies liegt hauptsächlich darin begründet, daß das Sicherungselement genau die Drehbewegung macht, die auch das eine Teil, mit dem es drehfest verbunden ist, ausführt.

Die Erfindung soll nachfolgend unter Bezug auf die Zeichnungen erläutert werden, wobei in diesen verschiedene Ansichten der Bolzensicherung dargestellt sind.

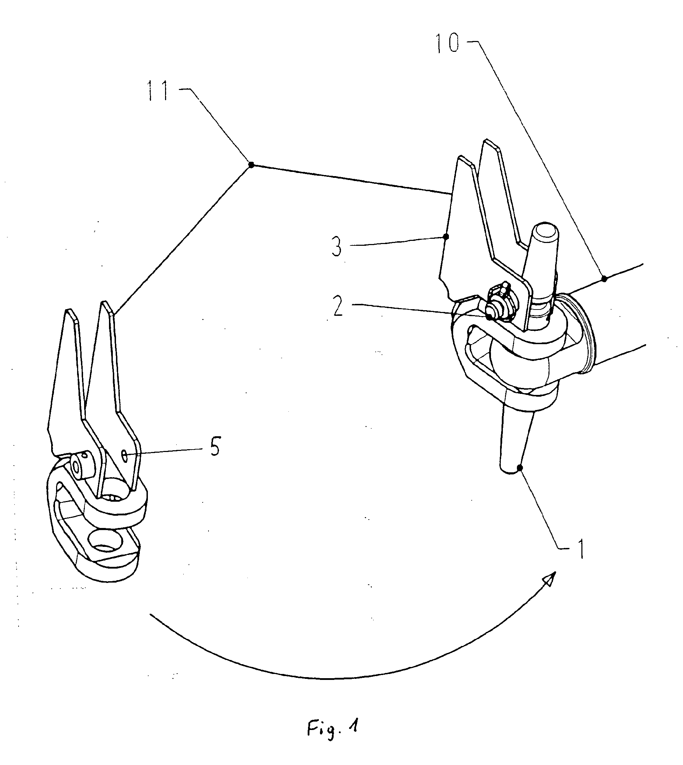

Die Figur 1 zeigt das Gesamtsystem, und zwar die Verbindung zweier Bauteile 10 und 3 mittels eines Bolzens 1. Der Bolzen 1 wird durch das Sicherungselement 2 gesichert. Das Sicherungselement 2 ist in dem Bauteil 3, und zwar einer Öffnung 5, gelagert und gesichert.

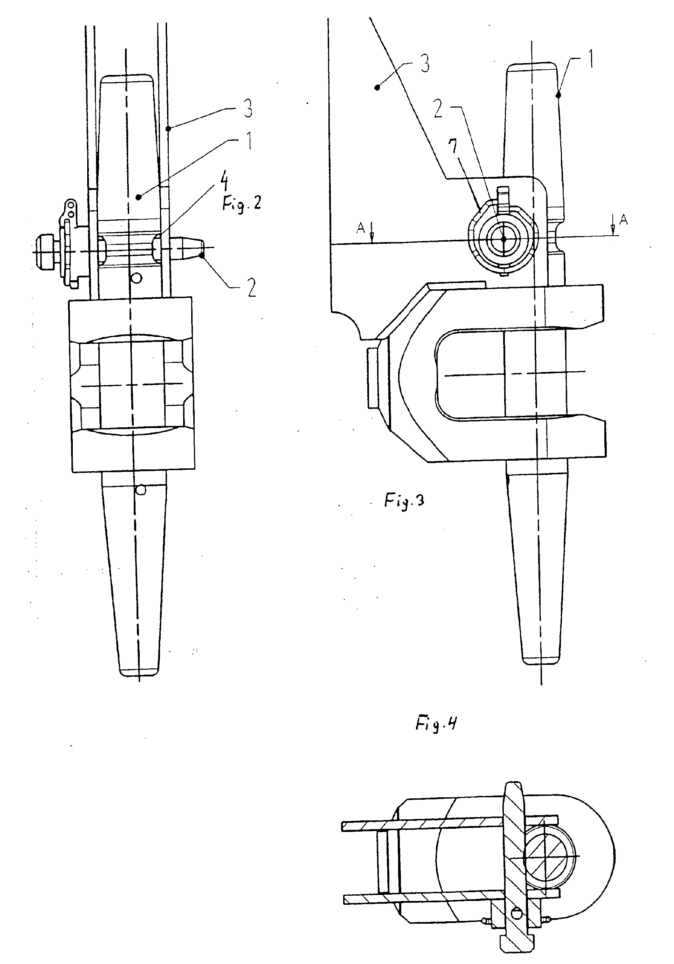

Die Figuren 2-4 zeigen in verschiedenen Ansichten das Zusammenwirken der einzelnen Teile, wobei mit 7 noch die zusätzliche Sicherung des Stiftes 2 bezeichnet ist,

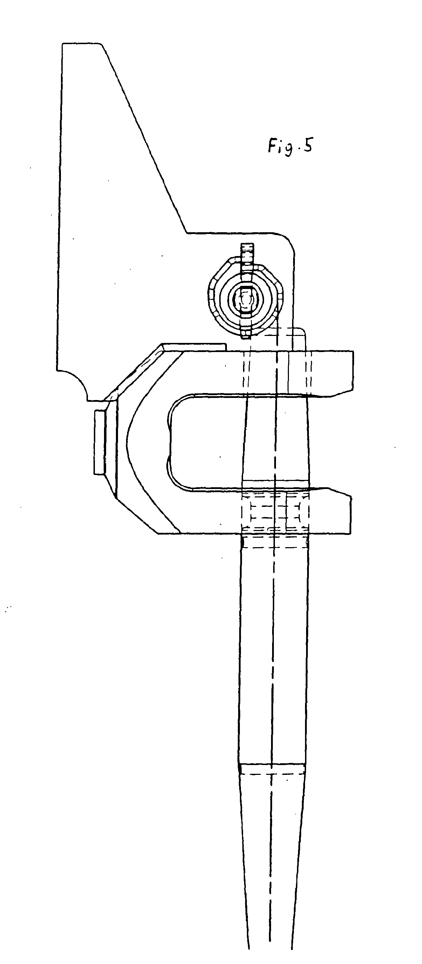

Die Figur 5 zeigt den Bolzen 1 beim Austreiben, wobei ersichtlich ist, dass die nutartige Vertiefung 4 so schmal ausgeführt ist, dass sich der Sicherungsstift nicht verhakt.

## Patentansprüche

1. Bolzensicherung mit einem Bolzen (1), der von der Ausnehmung wenigstens eines Bauteiles aufgenommen wird, und einem Sicherungselement (2), zur Sicherung des Bolzens gegen axiale Verschiebung, wobei der Bolzen in seinem Umfang eine nutartige, quer zur Bolzenachse verlaufende Vertiefung (4) aufweist, die mit dem Sicherungselement (2) in Eingriff bringbar ist,
**dadurch gekennzeichnet,**
**dass** in dem Bauteil eine mit der Vertiefung (4) im Bolzen (1) ausrichtbare Öffnung (5) vorgesehen ist, in die ein als Stift ausgebildetes Sicherungselement (2) derart einführbar ist, dass die Vertiefung (4) des Bolzens (1) diesen Stift sekantenartig aufnimmt.

2. Bolzensicherung nach Anspruch 1,
**dadurch gekennzeichnet,**
**dass** der Stift gegen axiale Verschiebung sicherbar ist.
